# EUROPEAN PATENT APPLICATION

(11) **EP 4 778 492 A1**
(43) Date of publication of application: **22.07.2026**
(21) Application number: 24848405.7
(22) Date of filing: 05.08.2024
(51) Int. Cl.: A61C 7/00

(54) **SHELL-SHAPED DENTAL APPLIANCE AND DENTAL APPLIANCE ASSEMBLY COMPRISING SAME**

(30) Priority: 03.08.2023 CN 202310974132
(71) Applicant: Wuxi EA Biotechnology Limited, Xinwu District Wuxi, Jiangsu 214131 (CN)
(72) Inventor: WANG, Meng, Wuxi Jiangsu 214131 (CN); LI, Junsheng, Wuxi Jiangsu 214131 (CN)
(74) Representative: Haseltine Lake Kempner LLP
(86) International application number: PCT/CN2024/109754
(87) International publication number: WO 2025/026452

(57) **Abstract**

The present invention relates to the technical field of orthodontics. Disclosed is a shell-shaped dental appliance and a dental appliance assembly comprising same. The shell-shaped dental appliance comprises a shell-shaped main body; an accessory installation area is formed on the shell-shaped main body; the shell-shaped main body is provided with a mark at a position corresponding to the accessory installation area; the characteristic of the mark is used for indicating at least one of the type, the installation position, and the installation direction of an external accessory installed to the accessory installation area. By means of such an arrangement, when an operator is to install an external accessory, the operator only needs to refer to the characteristic of the mark to select the external accessory of a correct type or to install the external accessory in a correct position or a correct direction, thereby avoiding, to the maximum extent, errors made by the operator during operation that may result in the external accessory failing to achieve an expected effect.

## Description

The present application claims the priority of Chinese patent application 2023109741323 filed on August 3, 2023. The contents of the Chinese patent application are incorporated herein by reference in their entireties.

### TECHNICAL FIELD

The present disclosure relates to the technical field of orthodontics, and in particular to a shell-shaped dental appliance and a dental appliance assembly comprising the same.

### BACKGROUND

When using a shell-shaped dental appliance for dental treatment (for example, orthodontic treatment or orthognathic treatment), it is sometimes necessary to add an external accessory to the shell-shaped dental appliance to assist in the treatment, such as a bimaxillary plate, bracket, a tongue button, a flat guide plate, and a jaw pad. These external accessories are processed separately and then fixed to the shell-shaped dental appliance by means of gluing, welding, mechanical connection, etc.

Since these external accessories may be standard parts with a predetermined standard installation surface, or they may be non-standard parts, the installation surface needs to be processed according to the shape of the shell-shaped dental appliance at the installation position. Therefore, the strength of these external accessories installed on the shell-shaped dental appliance is closely related to the geometric shape of the joint surface between the external accessories and the shell-shaped dental appliance.

Chinese patent application CN208725922U discloses a shell-shaped dental appliance and a shell-shaped main body thereof, wherein the dental appliance comprises a shell-shaped main body, on which an accessory installation area is formed, and the contour of the outer surface of the accessory installation area has a standard geometric shape, which basically matches with the contour of the external accessory installation surface, so that the external accessory can be fixed on the outer surface of the accessory installation area through its installation surface. This solution can solve the problem of connection and fixation between the external accessory and the dental appliance, but in actual operation, the operator faces other problems. For example, multiple external accessories may be installed on the accessory installation area of the dental appliance at the same time, the multiple external accessories are of different types and need to be installed in specific positions, or the installation of the external accessories needs to meet the requirements of a specific direction. In these cases, the operator is prone to making operational errors, resulting in the external accessories failing to achieve the expected effect.

### CONTENT OF THE PRESENT INVENTION

The technical problem to be solved in the present disclosure is for overcoming the defect in the prior art that an operator is prone to making operational errors, resulting in the external accessories failing to achieve the expected effect, and to provide a shell-shaped dental appliance and a dental appliance assembly comprising the same.

The present disclosure solves the above-mentioned technical problem through the following technical solutions:

A shell-shaped dental appliance, comprising a shell-shaped main body, on which an accessory installation area is formed; the shell-shaped dental appliance is characterized in that a mark is provided on the shell-shaped main body at a position corresponding to the accessory installation area, and a feature of the mark is used to indicate at least one of a type, an installation position, and an installation direction of an external accessory installed on the accessory installation area.

In this solution, the accessory installation area is formed on the shell-shaped main body of the shell-shaped dental appliance, and the accessory installation area is used to install the external accessory. By providing the mark at a position on the shell-shaped main body corresponding to the accessory installation area, the feature of the mark can be used to indicate at least one of the type, the installation position and the installation direction of the external accessory installed on the accessory installation area. When installing the external accessory, the operator only needs to refer to the feature of the mark to obtain indication information brought by the mark, and according to the indication information to select the external accessory of a correct type or to install the external accessory in a correct position or a correct direction, thereby avoiding, to the maximum extent, errors made by the operator during operation that may result in the external accessory failing to achieve an expected effect.

Furthermore, the features of the marks corresponding to at least two types of external accessories are different.

In this solution, when at least two types of external accessories need to be installed on the accessory installation area, by arranging the features of the corresponding marks to be different, different types of external accessories can be correctly installed.

Furthermore, the number of the marks is the same as the number of the external accessories installed on the accessory installation area, and the features of any two of the marks are different.

In this solution, by means of such an arrangement, when multiple external accessories need to be installed on the accessory installation area, the number of marks provided at the accessory installation area is the same as the number of the external accessories installed, and the features of each mark are different, so as to avoid the existence of multiple marks misleading the operator.

Furthermore, the marks have outer contours of different shapes corresponding to different external accessories installed on the accessory installation area.

In this solution, the position where the external accessory needs to be installed can be obtained by means of the position of the mark on the accessory installation area, and then by arranging the outer contour of the mark as different shapes, the operator can identify the type of the external accessory that needs to be installed based on the outer contours of different shapes, making it easier to identify the operation.

Furthermore, the outer contour of the mark extends at least along a first direction at the position of the accessory installation area, and the outer contour of the mark has a width dimension gradually changing along the first direction.

In this solution, the position where the external accessory needs to be installed can be obtained by means of the arrangement position of the mark at the accessory installation area, and then the outer contour of the mark is designed in dimension such that the mark has the function of indicating direction, and the operator can clearly know the direction in which the external accessory needs to be installed through the mark, and it is also easier to identify the operation.

Furthermore, the position where the mark is provided is located at a non-center position of the accessory installation area, and a direction from the mark to a center of the accessory installation area corresponds to the installation direction of the external accessory.

In this solution, the mark is located at the non-center position of the accessory installation area, so that the mark has a certain direction to the center of the accessory installation area, which corresponds to the installation direction of the external accessory. When the operator knows the position of the mark, the direction in which the external accessory is to be installed can be known, and the indication is simpler and clearer.

Furthermore, the mark is an arrow representing a specific direction, and a direction represented by the arrow corresponds to the installation direction of the external accessory; or, the mark is a linear structure representing a specific direction, and at least one of directions represented by the linear structure corresponds to the installation direction of the external accessory.

In this solution, the mark directly uses an arrow to represent a specific direction, and the specific direction pointed by the arrow corresponds to the installation direction of the external accessory, or the mark uses a linear structure to represent a specific direction, and at least one of the directions represented by the linear structure corresponds to the installation direction of the external accessory. After seeing the mark, the operator can clearly determine the direction in which the external accessory needs to be installed, and the indication is more direct and clearer.

Furthermore, the surface of the accessory installation area is provided with an anti-slid pad, and the anti-slip pad at least covers an area of the accessory installation area for installing the external accessory.

In this solution, by arranging the anti-slip pad on the surface of the accessory installation area and arranging the specific area covered by the anti-slip pad, when installing the external accessory on the accessory installation area, it is possible to avoid sliding and shifting of the external accessory relative to the shell-shaped main body during operation, thereby ensuring the accuracy and quality of the installation of the external accessory.

Furthermore, the mark is provided at the position of the accessory installation area by laser marking or printing.

In this solution, the laser marking or printing is used to arrange the mark at the position of the accessory installation area, so that the mark is only formed on the surface of the corresponding position, avoiding structural changes to the shell-shaped main body or the accessory installation area, and thus avoiding the impact caused by installing the external accessory on the accessory installation area.

Furthermore, the mark is provided on the surface of the accessory installation area, and an outer contour of the mark is consistent with an outer contour of the accessory installation area.

In this solution, when the mark is a first protrusion or a first groove, the position where the mark is provided is located at the surface of the accessory installation area, and the outer contour of the mark can be consistent with the outer contour of the accessory installation area. The contour of the accessory installation area can be directly used as the mark to indicate the type and the installation direction of the external accessory that needs to be installed, which is more reasonable in structure.

Furthermore, the mark is a first protrusion or a first recess having an outer contour.

In this solution, by arranging the mark at the accessory installation area by means of the first protrusion or the first groove, the indicating feature of the mark is more obvious, making it easier for the operator to observe. Meanwhile, with this method, when the external accessory is installed on the accessory installation area, the cooperation between the mark and the external accessory can be utilized to further position the external accessory, completely preventing the possibility of incorrect installation of the external accessory.

A dental appliance assembly, which is characterized in that the dental appliance assembly comprises:
the shell-shaped dental appliance as described above;
an external accessory which has a second recess on its installation surface, the second recess being matched with the first protrusion along a specific direction, or which has a second protrusion on its installation surface, the second protrusion being matched with the first recess along a specific direction.

In this solution, when the mark is the first protrusion or the first groove, the installation surface of the external accessory has the second recess that matches with the first protrusion, or the installation surface of the external accessory has the second protrusion that matches with the first recess. When the external accessory is installed in the accessory installation area, the problem of insufficient connection strength is avoided. At the same time, the matching connection between the mark and the external accessory is utilized to realize the positioning of the external accessory relative to the accessory installation area, and the matching between the external accessory and the accessory installation area is fool-proofed to completely prevent assembly errors between the two.

Furthermore, the first protrusion is two column structures arranged at intervals, radial dimensions of the two column structures are different, and the second recess is tangentially matched with both of the two column structures.

In this solution, by arranging two column structures with different radial dimensions, when the second recess is clamped with the first protrusion, the second recess can be tangentially matched with the two column structures simultaneously, so that the external accessory can only be installed on the accessory installation area along a specific direction, and the fool-proof design of the physical structure completely avoids assembly errors between the two.

Furthermore, an outer contour of the first protrusion is a cam-shaped cylindrical structure, and an inner wall contour of the second recess is matched with the outer contour of the first protrusion.

In this solution, by arranging the outer contour of the first protrusion and the inner wall contour of the second groove to be cam-shaped, the two can only be clamped with each other in a specific direction. Similarly, the fool-proof design of the physical structure is used to completely avoid assembly errors between the external accessory and the accessory installation area.

A dental appliance assembly, which is characterized in that the dental appliance assembly comprises: the shell-shaped dental appliance as described above; and an external accessory, which is correspondingly installed at a position of the accessory installation area.

In this solution, the dental appliance assembly comprises the shell-shaped dental appliance described above, and the features of the mark can be used to indicate at least one of the type, the installation position and the installation direction of the external accessory that need to be installed, effectively solving the defect in the prior art that the operator is prone to making operational errors, resulting in the external accessories failing to achieve the expected effect.

The positive progress effect of the present invention is:

An accessory installation area is formed on the shell-shaped main body of the shell-shaped dental appliance, and the accessory installation area is used to install an external accessory. By arranging a mark at a position on the shell-shaped main body corresponding to the accessory installation area, the features of the mark can be used to indicate at least one of the type, the installation position and the installation direction of the external accessory installed on the accessory installation area. When installing the external accessory, the operator only needs to refer to the features of the mark to obtain indication information brought by the mark, and according to the indication information to select the external accessory of a correct type or to install the external accessory in a correct position or a correct direction, thereby avoiding, to the maximum extent, errors made by the operator during operation that may result in the external accessory failing to achieve an expected effect.

### BRIEF DESCRIPTION OF THE DRAWINGS

FIG.1 is a schematic diagram of the overall assembly of a dental appliance assembly in Embodiment 1 of the present invention.
FIG. 2 is a schematic structural diagram of the shell-shaped dental appliance in Embodiment 1 of the present invention.
FIG. 3 is a schematic structural diagram of the shell-shaped main body in Embodiment 1 of the present invention.
FIG. 4 is a schematic structural diagram of a shell-shaped dental appliance in Embodiment 2 of the present invention.
FIG. 5 is a schematic structural diagram of a shell-shaped dental appliance in Embodiment 3 of the present invention.
FIG. 6 is a schematic structural diagram of a shell-shaped dental appliance in Embodiment 4 of the present invention.
FIG. 7 is a schematic structural diagram of a shell-shaped dental appliance in Embodiment 5 of the present invention.
FIG. 8 is a schematic diagram of the coordination between the external accessory and the mark in Embodiment 6 of the present invention.
FIG. 9 is a schematic structural diagram of an external accessory in Embodiment 6 of the present invention.
FIG. 10 is a schematic structural diagram (I) of the mark in Embodiment 6 of the present invention.
FIG. 11 is a schematic structural diagram (II) of the mark in Embodiment 6 of the present invention.

### Description of reference numerals:

Dental appliance assembly 10; shell-shaped dental appliance 100; shell-shaped main body 110; accessory installation area 111; mark 120; external accessory 200.

### DETAILED DESCRIPTION OF THE PREFERRED EMBODIMENT

The following describes in detail embodiments of the present invention, examples of which are shown in the accompanying drawings, wherein the same or similar reference numerals throughout represent the same or similar elements or elements having the same or similar functions. The embodiments described below with reference to the accompanying drawings are exemplary and are intended to be used to explain the present invention, and are not to be construed as limiting the present invention. All other embodiments obtained by ordinary persons skilled in the art based on the embodiments of the present invention without creative labor are within the scope of protection of the present invention.

In the description of the present invention, it should be understood that the terms "center", "longitudinal", "transverse", "length", "width", "thickness", "up", "down", "front", "back", "left", "right", "vertical", "horizontal", "top", "bottom", "inside", "outside", "clockwise", "counterclockwise", "axial", "circumferential", "radial" and the like, indicating orientations or positional relationships, are based on the orientations or positional relationships shown in the accompanying drawings, and are only for the convenience of describing the present invention and simplifying the description, and do not indicate or imply that the device or element referred to must have a specific orientation, be constructed and operated in a specific orientation, and therefore cannot be understood as limiting the present invention. In addition, the terms "first" and "second" are used for a purpose of description only and cannot be understood as indicating or implying relative importance or implicitly indicating the number of the technical features indicated. Therefore, features defined as "first" and "second" may explicitly or implicitly comprise one or more of the features. In the description of the present invention, "multiple" means two or more, unless otherwise clearly and specifically defined.

### Embodiment 1

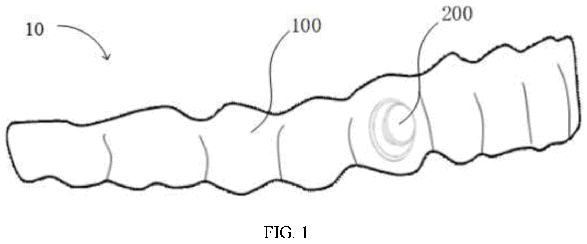

This embodiment provides a dental appliance assembly 10, as shown in FIG. 1, FIG. 2, and FIG. 3, the dental appliance assembly 10 comprises a shell-shaped dental appliance 100 and an external accessory 200, the main portion of the shell-shaped dental appliance 100 is a shell-shaped main body 110, and the external accessory 200 is fixed on the shell-shaped main body 110. Herein, the shell-shaped main body 110 is formed with an accessory installation area 111, the outer surface contour of which has a standard geometric shape. The external accessory 200 is fixed to the accessory installation area 111 of the shell-shaped main body 110 via its installation surface, and the specific fixing method can be any method known in the art, such as gluing, welding, or mechanical connection. Furthermore, the external accessory 200 can be any elements required to be mounted on the shell-shaped dental appliance 100 in the technical field of orthodontics, such as a flat guide plate, a traction button, a traction hook, an indicator, or the like.

In this embodiment, the contour of the outer surface of the accessory installation area 111 has a standard geometric shape, which can be better used for installing the external accessory 200. However, in other embodiments, the contour of the outer surface of the accessory installation area 111 may not have a standard geometric shape. For example, the external accessory 200 is installed on the surface of the shell-shaped main body 110, and the installation location can be called the accessory installation area 111.

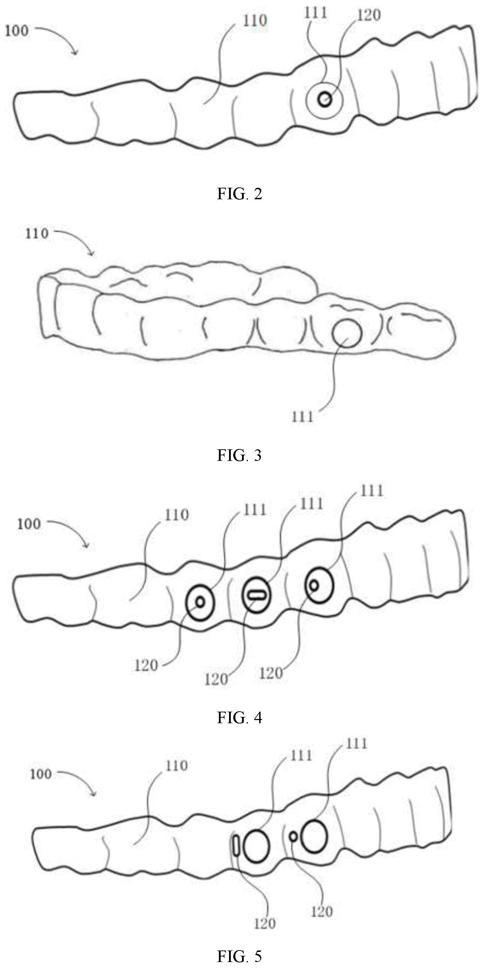

Furthermore, as shown in FIG. 2, the shell-shaped main body 110 is provided with a mark 120 on the surface of the accessory installation area 111. The outer contour of the mark 120 is circular. The circular mark 120 can be used to indicate the installation position of the external accessory 200 installed on the accessory installation area 111. In other words, the position of the circular mark 120 on the accessory installation area 111 is the installation position of the external accessory 200. By means of such an arrangement, when installing the external accessory 200, the operator can correctly install it according to the indication information provided by the mark 120. For example, the operator only needs to refer to the position of the mark 120 on the accessory installation area 111 to install the external accessory 200 in a correct position, thereby avoiding, to the maximum extent, errors made by the operator during operation that may result in the external accessory failing to achieve an expected effect.

The mark 120 is placed on the surface of the accessory installation area 111 because the external accessory 200 is installed on the accessory installation area 111. Therefore, compared with placing the mark 120 elsewhere on the shell-shaped main body 110, placing the mark 120 directly on the surface of the accessory installation area 111 can prevent damage to other parts of the shell-shaped main body 110 and reduce the risk of poor fit between the shell-shaped main body 110 and the user's teeth. However, in other embodiments, the mark 120 can be placed near the accessory installation area 111, that is, on the surface of the shell-shaped main body 110, as long as the mark 120 can provide indication information to the operator.

Furthermore, if multiple external accessories 200 are needed to be installed on the accessory installation area 111, the number of the marks 120 on the accessory installation area 111 will also be multiple. That is, the number of the marks 120 on the accessory installation area 111 is the same as the number of the external accessories 200 needed to be installed, and the positions indicated by any two marks 120 are different. The operator can simultaneously install multiple external accessories 200 based on the positions of the multiple marks 120, which makes the operation more convenient. For example, three external accessories 200 are needed to be installed on the shell-shaped dental appliance 100, two of which are traction hooks with different installation angles, and one of which is a traction buckle, the features indicated by the corresponding marks 120 of the three external accessories 200 can be different.

Furthermore, an anti-slip pad (not shown in the figure) is provided on the surface of the accessory installation area 111, the anti-slip pad can at least cover the area on the accessory installation area 111 for installing the external accessory 200, so that when the external accessory 200 is installed on the accessory installation area 111, it can avoid sliding and shifting of the external accessory 200 relative to the shell-shaped main body 110 during operation, thereby ensuring the accuracy and quality of the installation of the external accessory 200.

In this embodiment, the mark 120 can be directly provided on the surface of the accessory installation area 111 by laser marking or printing, or the mark 120 can be provided as a first protrusion or first recess with a circular contour on the surface of the accessory installation area 111. Specifically, by laser marking or printing, the mark 120 can be formed only on the surface of the accessory installation area 111, avoiding structural changes to the accessory installation area 111 and thus avoiding affecting the installation of the external accessory 200 on the accessory installation area 111. However, by arranging the mark 120 as a first protrusion or first recess with a circular contour, the indicating feature of the mark 120 can be made more obvious, making it easier for operators to observe. At the same time, when the external accessory 200 is installed on the accessory installation area 111, the cooperation between the mark 120 and the external accessory 200 can be used to further position the external accessory 200, completely preventing the external accessory 200 from being installed incorrectly.

Regardless of the method used to form the mark 120 on the accessory installation area 111, the mark 120 can be used to indicate the location for the operator to install the external accessory 200. However, it should be noted that when the mark 120 is provided as a first protrusion or a first recess with a circular contour, the mark 120 can be integrally formed with the accessory installation area 111. Specifically, when the mark 120 is a first protrusion with a circular contour, since the accessory installation area 111 is also a protrusion structure on the surface of the shell-shaped main body 110, the mark 120 can be integrally formed with the accessory installation area 111 during processing. Alternatively, when the mark 120 is a first recess with a circular contour, the mark 120 can also be directly processed on the accessory installation area 111, so that the mark 120 and the accessory installation area 111 are integrally formed.

In addition, when the mark 120 is provided as a first protrusion or a first recess with a circular contour, the corresponding installation surface of the external accessory 200 should also have a second recess that cooperates with the first protrusion, or a second protrusion that cooperates with the first recess. When the external accessory 200 is installed on the accessory installation area 111, the problem of insufficient connection strength can be avoided. At the same time, the positioning of the external accessory 200 relative to the accessory installation area 111 is achieved by utilizing the cooperative connection between the mark 120 and the external accessory 200.

This embodiment also provides an auxiliary operation method to accurately install the external accessory 200 in conjunction with the mark 120 on the shell-shaped dental appliance 100. Specifically, each shell-shaped dental appliance 100 has an ID identification feature, the ID identification feature can be a QR code or serial number on the shell-shaped dental appliance 100, a QR code or serial number on a transferring work order, or a QR code or serial number molded separately on the film before demolding. During the process of installing the external accessory 200, an information acquisition device (e.g., a scanning device or manual input) first obtains the ID identification feature of the semi-finished shell-shaped dental appliance 100, and based on a pre-designed solution in the system, the type, the installation position, and the installation direction of the external accessory 200 are displayed on a display device (e.g., a display screen) to assist the operator in accurately identifying the external accessory 200. This configuration allows the operator to install the external accessory 200 by observing the screen and combining it with the mark 120 on the shell-shaped dental appliance 100, and allows the operator to quickly adjust the operation during the installation process, ensuring that the final installation quality of the external accessory 200 is optimized.

In addition, after the ID identification feature of the semi-finished shell-shaped dental appliance 100 is obtained by the information acquisition device, it also can be displayed by means of the corresponding external accessory 200 in the system to automatically remind the type of the external accessory 200 to be selected. For example, the corresponding type of the external accessory 200 box is turned on through a control setting, and the rest are closed, or the corresponding type of the external accessory 200 box flashes a warning light, etc.

Furthermore, a display device may not be provided, and only a collection and identification device (for example, a camera) is required to detect the type, the installation position and the installation direction of the external accessory 200. The collection and identification device needs to be able to quickly and accurately detect whether the type, the installation position and the installation direction of the external accessory 200 are correct, and transmit the collected data to the control system. The control system uses the collected data to calculate in real time whether the external accessory 200 is in the correct position and correct direction. When the actual installation position or installation direction deviates from the correct position or correct direction, the system can respond quickly and remind the operator to correct the error to ensure that the external accessory 200 is installed in the correct position and correct direction.

### Embodiment 2

This embodiment provides a dental appliance assembly 10, whose structure and assembly are substantially the same as those of the dental appliance assembly 10 provided in Embodiment 1, that is, the dental appliance assembly 10 also comprises a shell-shaped dental appliance 100 and an external accessory 200. The shell-shaped dental appliance 100 comprises a shell-shaped main body 110, and the external accessory 200 is fixed to the shell-shaped main body 110. Herein, the shell-shaped main body 110 is formed with an accessory installation area 111, and the external accessory 200 is fixed to the accessory installation area 111 of the shell-shaped main body 110 via its installation surface.

The difference is that, in this embodiment, as shown in FIG. 4, three accessory installation areas 111 are formed on the shell-shaped main body 110, and a mark 120 is provided on the surface of each accessory installation area 111, wherein the outer contour of the mark 120 on the accessory installation areas 111 at both ends is circular, and the outer contour of the mark 120 on the accessory installation area 111 in the middle is runway-shaped. All of the marks 120 provided on the surfaces of the three accessory installation areas 111 can be used to indicate the installation position of the external accessory 200 installed on each accessory installation area 111.

As shown in FIG. 4, the mark 120 on the accessory installation area 111 on the left is provided at the center of the accessory installation area 111, therefore, the mark 120 on the accessory installation area 111 is only used to indicate the installation position of the external accessory 200 installed on the accessory installation area 111. The mark 120 on the accessory installation area 111 on the right is provided at the edge of the accessory installation area 111, therefore, the mark 120 on the accessory installation area 111 can be used not only to indicate the installation position of the external accessory 200 installed on the accessory installation area 111, but also to indicate the installation direction of the external accessory 200 installed on the accessory installation area 111. Specifically, the direction from the center of the accessory installation area 111 to the mark 120 on the accessory installation area 111 corresponds to the installation direction of the external accessory 200, when the operator knows the position of the mark 120, the direction in which the external accessory 200 is to be installed can be known, and the indication is clearer. The outer contour of the mark 120 on the accessory installation area 111 in the middle is runway-shaped, therefore, the mark 120 on the accessory installation area 111 can be used not only to indicate the installation position of the external accessory 200 installed on the accessory installation area 111, but also to indicate the specific type of the external accessory 200 installed on the accessory installation area 111. Specifically, the mark 120 has outer contours of different shapes corresponding to different external accessories 200 installed on the accessory installation area 111. For example, when the outer contour is circular, it represents one type of external accessory 200, and when the outer contour is runway-shaped, it represents another type of external accessory 200. When the operator knows the specific shape of the outer contour of the mark 120, the type of external accessory 200 that needs to be installed at the position can be known, and the operation is simple and convenient.

In this embodiment, each of the three accessory installation areas 111 corresponds to one external accessory 200, therefore, there is only one mark 120 on each accessory installation area 111. However, as in Embodiment 1, if multiple external accessories 200 need to be installed on a single accessory installation area 111, then the number of marks 120 on the accessory installation area 111 will also be multiple. That is, the number of marks 120 on the accessory installation area 111 will be the same as the number of the external accessories 200 to be installed, and any two marks 120 will indicate different types, installation locations, or installation directions of the external accessories 200. This allows the operator to simultaneously install multiple external accessories 200 based on the locations of the multiple marks 120, making the operation more convenient and preventing confusion. It should be noted that this situation belongs to the case where the type corresponding to each external accessory 200 is different, and the different types result in different installation positions and installation directions. However, in actual situations, there may be only two types of multiple external accessories 200, the installation positions of each type of external accessories 200 may be different, but the installation directions may be the same. In this case, the features of the corresponding marks 120 of the two types of external accessories 200 are different, so as to mainly distinguish the installation of different types of external accessories 200, without distinguishing the installation of the same type of external accessories 200.

### Embodiment 3

This embodiment provides a dental appliance assembly 10, whose structure and assembly are substantially the same as those of the dental appliance assemblies 10 provided in Embodiment 1 and Embodiment 2. That is, the dental appliance assembly 10 also comprises a shell-shaped dental appliance 100 and an external accessory 200. The shell-shaped dental appliance 100 comprises a shell-shaped main body 110, and the external accessory 200 is fixed to the shell-shaped main body 110.

The difference is that in this embodiment, as shown in FIG. 5, two accessory installation areas 111 are formed on the shell-shaped main body 110, and a mark 120 is provided at the location of each accessory installation area 111. However, the mark 120 is provided on the outer periphery of the corresponding accessory installation area 111, that is, at a position on the shell-shaped main body 110 close to the accessory installation area 111. Specifically, as shown in FIG. 5, the two marks 120 are both provided on the left side of the corresponding accessory installation area 111, wherein the outer contour of the mark 120 corresponding to the accessory installation area 111 on the right side is circular, the same as Embodiment 2, and the direction from the center of the accessory installation area 111 to the mark 120 on the accessory installation area 111 corresponds to the installation direction of the external accessory 200, and when the operator knows the position of the mark 120, the direction in which the external accessory 200 is to be installed can be known. The outer contour of the mark 120 corresponding to the accessory installation area 111 on the left side is runway-shaped, the same as Embodiment 2, and it can also be used to indicate the specific type of external accessory 200 installed on the accessory installation area 111. For specific methods, please refer to Embodiment 2.

In this embodiment, the mark 120 is provided on the periphery of the accessory installation area 111, which can prevent the mark 120 from damaging the surface of the accessory installation area 111 and prevent the installation of an external accessory 200 on the accessory installation area 111 from causing a reduction in connection strength.

However, in a similar solution, the mark 120 can be arranged across the accessory installation area 111, that is, part of the mark 120 is located inside the accessory installation area 111, and the other part of it is located outside the accessory installation area 111, as long as it does not affect the mark 120 from performing its indication function and does not affect the installation of the external accessory 200.

### Embodiment 4

This embodiment provides a dental appliance assembly 10, whose structure and assembly are substantially similar to those of the dental appliance assemblies 10 provided in Embodiment 1 and Embodiment 2. Specifically, the dental appliance assembly 10 also comprises a shell-shaped dental appliance 100 and an external accessory 200. The shell-shaped dental appliance 100 comprises a shell-shaped main body 110, and the external accessory 200 is fixed to the shell-shaped main body 110. Herein, the shell-shaped main body 110 is formed with an accessory installation area 111, and the external accessory 200 is fixed to the accessory installation area 111 of the shell-shaped main body 110 via its installation surface.

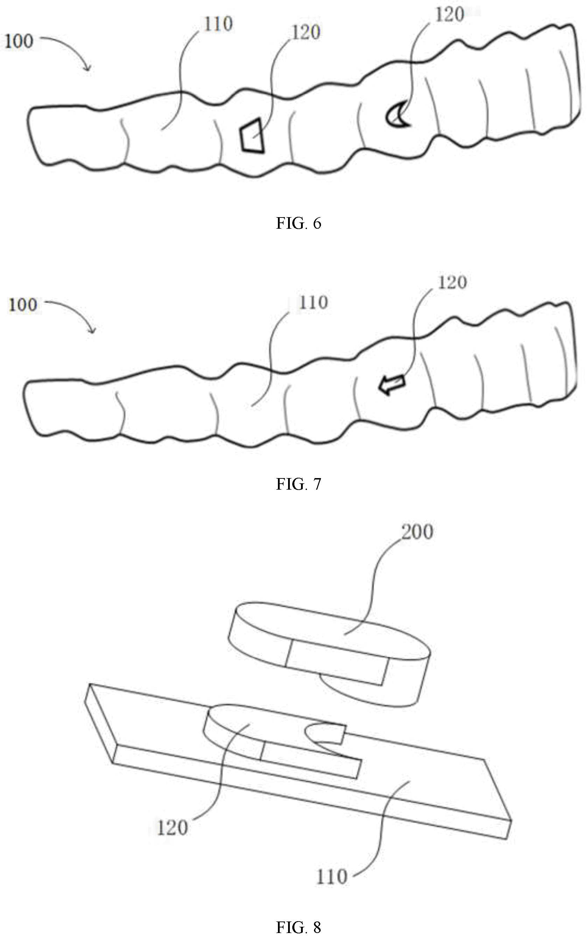

The difference is that in this embodiment, as shown in FIG. 6, one accessory installation area 111 is formed on the shell-shaped main body 110, and a mark 120 is provided on the surface of the accessory installation area 111, and the outer contours of the accessory installation area 111 and the mark 120 are identical, both in the shape of an arrow. The accessory installation area 111 and the mark 120 located above it can be provided separately, or, as described in Embodiment 1, the accessory installation area 111 and the mark 120 located above it can be integrally formed. Furthermore, as shown in Embodiment 1 and Embodiment 2, the accessory installation area 111 can be a circular area provided on the shell-shaped main body 110, and the mark 120 located above it can be provided on the surface of the accessory installation area 111 by laser marking or printing.

By directly using an arrow representing a specific direction as the mark 120, the specific direction pointed by the arrow corresponds to the installation direction of the external accessory 200. The operator can clearly determine the direction in which the external accessory 200 needs to be installed when sees the mark 120, and the indication is more direct and clearer.

Another similar design involves that the mark 120 is directly provided as a linear structure representing a specific direction, with at least one of the directions represented by the linear structure corresponding to the installation direction of the external accessory 200. For example, if the mark 120 is a line segment with its two ends extending in opposite directions, the directions represented by two ends of the line segment are the directions it represented, wherein at least one of the directions is the installation direction of the external accessory 200. In this case, the operator can clearly determine the direction in which the external accessory 200 should be installed when sees the mark 120, providing a clear indication. For example, if the mark 120 is used to indicate the installation of a double-wing lingual buckle, since the double-wing lingual buckle structure has two lingual buckles arranged along the same line, only a line segment is required to indicate the installation, eliminating the need for an arrow indicating a specific direction. Furthermore, both the arrow and the line segment can serve as marks 120 indicating the type of external accessory 200. For example, an ordinary traction hook is represented by an arrow, while a double-wing traction hook is represented by a line segment.

### Embodiment 5

This embodiment provides a dental appliance assembly 10, whose structure and assembly are substantially similar to those of the dental appliance assemblies 10 provided in Embodiment 4, the difference is that this embodiment provides another mark 120 for indicating direction. As shown in FIG. 7, two accessory installation areas 111 are formed on the shell-shaped main body 110, and marks 120 are provided on the surfaces of the two accessory installation areas 111. One mark 120 has a trapezoidal outer contour, while the other mark 120 has a crescent-shaped outer contour. The common feature of these marks 120 is that the outer contours of the corresponding accessory installation areas 111 extend in a single direction, and the width of the outer contour of the mark 120 gradually changes along this direction. This change in width enables the mark 120 to function as indicating a direction. It should be noted that in other embodiments, the outer contour of the mark 120 on the accessory installation area 111 can be designed as needed to enable the mark 120 to indicate the type, installation position, and installation direction of the external accessory 200 to be installed.

### Embodiment 6

This embodiment provides a dental appliance assembly 10, the structure and assembly of which are substantially the same as those of Embodiment 4 and Embodiment 5. The difference is that the mark 120 provided in this embodiment is a first protrusion with an outer contour, and the installation surface of the external accessory 200 is provided with a second recess that is matched with the first protrusion along a specific direction. It should be noted that this specific direction refers to the direction in which the first protrusion and the second recess match, and the first protrusion and the second recess can only match along this direction.

As shown in FIG. 8, the outer contour of the first protrusion is a closed shape formed by two semicircular arcs and two straight lines. The second recess is provided on the surface of the external accessory 200 near the first protrusion, allowing the first protrusion to engage with the second recess when the external accessory 200 abuts the accessory installation area 111 or the shell-shaped main body 110. By means of this arrangement, it allows the position of the first protrusion to indicate where the external accessory 200 needs to be installed, and the outer contour of the first protrusion to indicate the direction in which the external accessory 200 should be installed. Furthermore, this method further can use the cooperation of the mark 120 with the external accessory 200 to further position the external accessory 200, completely preventing incorrect installation of the external accessory 200.

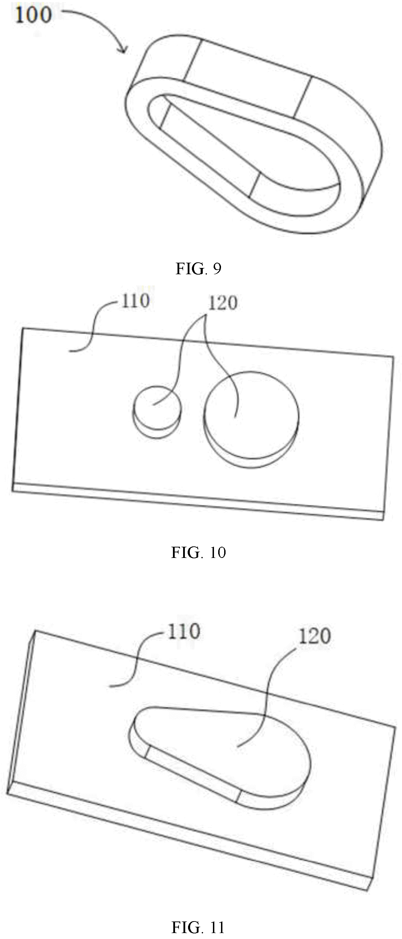

A similar design, as shown in FIG. 9, is that the bottom of the external accessory 200 is the second recess, and the inner wall profile of the second recess is a cam shape, then the outer contour of the corresponding mark 120 is as shown in FIG. 10 or FIG. 11. In FIG. 10, there are two marks 120 corresponding to the second recess, and the two marks 120 are column structures arranged at intervals, and the radial dimensions of the two column structures are different, and the two column structures are simultaneously tangentially matched with the two ends of the second recess. By arranging two column structures with different radial dimensions, when the second recess is clamped with the first protrusion, the second recess can be simultaneously tangentially matched with the two column structures, so that the external accessory 200 can only be installed on the accessory installation area 111 along a specific direction, and the fool-proof design of the physical structure completely avoids assembly errors between the two. The mark 120 in FIG. 11 is the first protrusion, the outer contour of the first protrusion is the same as the inner wall contour of the second recess, and is also a cam shape. Therefore, the first protrusion can fully match with the second recess, so that the two can only be clamped with each other in a specific direction, and the fool-proof design of the physical structure is also used to completely avoid assembly errors between the external accessory 200 and the accessory installation area 111.

In addition, in other embodiments, the mark 120 may be provided as a first recess having an outer contour, and the installation surface of the external accessory 200 may have a second protrusion that is matched with the first recess.

It should be noted that when the mark 120 is the first protrusion with an outer contour, and the outer contours of the accessory installation area 111 and the mark 120 are the same, if the second recess of the external accessory 200 is matched with the first protrusion, the size of the external accessory 200 may be larger than the size of the accessory installation area 111. When the external accessory 200 is installed, a gap may be formed between the external accessory 200 and the surface of the shell-shaped main body 110. The thickness of the gap is equal to the thickness of the accessory installation area 111. In this case, the depth of the second recess can be provided as slightly greater than the height of the first protrusion, which ensures that when the second recess and the first protrusion are matched with each other, the second recess can also enclose the accessory installation area, thus avoiding the formation of a gap between the external accessory 200 and the surface of the shell-shaped main body 110 after being installed.

Although specific embodiments of the present invention have been described above, those skilled in the art will appreciate that these are merely illustrative and that the scope of the present invention is defined by the appended claims. Those skilled in the art may make various changes or modifications to these embodiments without departing from the principles and essence of the present invention, and such changes and modifications are intended to fall within the scope of the present invention.

## Claims

1. A shell-shaped dental appliance, comprising a shell-shaped main body, on which an accessory installation area is formed;
wherein a mark is provided on the shell-shaped main body at a position corresponding to the accessory installation area, and a feature of the mark is used to indicate at least one of a type, an installation position, and an installation direction of an external accessory installed on the accessory installation area.

2. The shell-shaped dental appliance according to claim 1, wherein the features of the marks corresponding to at least two types of external accessories are different.

3. The shell-shaped dental appliance according to claim 1 or 2, wherein the number of the marks is the same as the number of the external accessories installed on the accessory installation area, and the features of any two of the marks are different.

4. The shell-shaped dental device according to any one of claims 1 to 3, wherein the marks have outer contours of different shapes corresponding to different external accessories installed on the accessory installation area.

5. The shell-shaped dental appliance according to any one of claims 1 to 4, wherein an outer contour of the mark extends at least along a first direction at a position of the accessory installation area, and the outer contour of the mark has a width dimension gradually changing along the first direction.

6. The shell-shaped dental appliance according to any one of claims 1 to 5, wherein the position where the mark is provided is located at a non-center position of the accessory installation area, and a direction from the mark to a center of the accessory installation area corresponds to the installation direction of the external accessory.

7. The shell-shaped dental appliance according to any one of claims 1 to 6, wherein the mark is an arrow representing a specific direction, and a direction represented by the arrow corresponds to the installation direction of the external accessory; or, the mark is a linear structure representing a specific direction, and at least one of directions represented by the linear structure corresponds to the installation direction of the external accessory.

8. The shell-shaped dental appliance according to any one of claims 1 to 7, wherein a surface of the accessory installation area is provided with an anti-slid pad, and the anti-slid pad at least covers an area of the accessory installation area for installing the external accessory.

9. The shell-shaped dental appliance according to any one of claims 1 to 8, wherein the mark is arranged at a position of the accessory installation area by laser marking or printing.

10. The shell-shaped dental appliance according to any one of claims 1 to 9, wherein the mark is provided on a surface of the accessory installation area, and an outer contour of the mark is consistent with an outer contour of the accessory installation area.

11. The shell-shaped dental appliance according to any one of claims 1 to 10, wherein the mark is a first protrusion or a first recess having an outer contour.

12. A dental appliance assembly, comprising:
the shell-shaped dental according to claim **11;** and
an external accessory, which has a second recess on its installation surface, the second recess being matched with the first protrusion along a specific direction, or which has a second protrusion on its installation surface, the second protrusion being matched with the first recess along a specific direction.

13. The dental appliance assembly according to claim 12, wherein the first protrusion is two column structures arranged at intervals, radial dimensions of the two column structures are different, and the second recess is tangentially matched with both of the two column structures.

14. The dental appliance assembly according to claim 12 or claim 13, wherein an outer contour of the first protrusion is a cam-shaped column structure, and an inner wall contour of the second recess is matched with the outer contour of the first protrusion.

15. A dental appliance assembly, comprising:
the shell-shaped dental appliance according to any one of claims 1 to 10; and
an external accessory, which is correspondingly installed at a position of the accessory installation area.
